# EUROPEAN PATENT APPLICATION

(11) **EP 2 594 861 A2**
(43) Date of publication of application: **22.05.2013**
(21) Application number: 12193529.0
(22) Date of filing: 21.11.2012
(51) Int. Cl.: F24H 9/20

(54) **Device for protection from overheating of a hot-water furnace for local heating**

(30) Priority: 21.11.2011 CZ 20110753
(71) Applicant: Tipek, Michal, 36301 Ostrov (CZ)
(72) Inventor: Tipek, Michal, 36301 Ostrov (CZ); Pospísek, Libor, 602 00 Brno (CZ)
(74) Representative: Musil, Dobroslav

(57) **Abstract**

The invention relates to a device for overheating protection of a hot-water furnace for local heating, where the furnace (6) is by its internal heat exchanger connected to the main heating circuit. To the main heating circuit (1) is in parallel manner assigned at least one external protective heating circuit (2) , both circuits (1, 2) are by a regulated valve (3) interconnected at the output of heated water from the furnace, in the protective heating circuit (2) is integrated at least one additional heat consumer, whose emitted thermal energy is higher than the maximal furnace (6) output, to heated water output from the furnace (6) is assigned at least one state sensor, particularly a temperature sensor (5) and/or a pressure sensor (4), the state sensor is connected to a module (7) for state detection and evaluation, which is coupled with a control device (15) of power elements, particularly the regulated valve (3) and operation control of the furnace (6), while individual electrically supplied elements are connected to primary source of electrical power and to backup source of electrical power (12) equipped with at least one storage battery (120).

## Description

### Technical field

The invention relates to device for protection of a hot-water furnace for local heating from overheating, where the furnace is by its internal heat exchanger connected to the main heating circuit.

### Background art

Hot-water furnaces for local heating, whose fuel combustion lasts in order of hours, are intended mainly for household heating and have the output limit of 100 kW. It is not possible to protect such furnaces from overheating by switching them off, or it's not even possible to switch them off. According to the applicable standard, it's necessary to protect such furnaces from overheating by so called aftercooling circuit, which is made inside the furnace as a secondary protective heat line exchanger. The aftercooling circuit is connected to a water supply by its input via a thermostatic valve, and the output of the aftercooling circuit runs either directly into sewerage, or into an accumulation tank. When furnace temperature rises above the permissible level, the thermostatic valve opens the input of the aftercooling circuit, water starts flowing through it and is heated up in the furnace, by means of which the furnace is cooled down.

Such protection of a hot-water furnace from overheating has basically four disadvantages.

The first disadvantage is that it is necessary to secure a sufficient amount of water for cooling down a furnace, which is as high as 30 - 100 m³ of water for cooling down one furnace, depending on furnace output. This demand is not possible to meet in areas e.g. with water shortage, or if there is a risk of water shortage in the case of electricity failure. Such a risk area can be represented by an area where a heated building, thus also a furnace, is supplied with water from well, which is drawn from the well by an electric pump, so in the case of electric failure it is not possible to secure a water supply to the aftercooling circuit without big investments in a backup power supply for supplying the well pump. Further, such areas are concerned, where a lot of furnaces with the aftercooling circuit are connected to a public water main, and where the public water main doesn't have enough capacity to aftercool all connected furnaces, in the case of failure of an electric network supplying circulation pumps of heating systems heated by means of all connected furnaces. It is also possible that the situation of the water main changes during the time of furnace usage. E.g. at the moment of installation of the specific furnace, capacity of the water main is sufficient but it does not increase as the number of furnaces, connected to the water main by their aftercooling circuits, gradually increases, and so, in the case that connected furnaces need aftercooling, the water main is not able to meet a demand for aftercooling water.

The second disadvantage of state of the art is that furnace protection by means of the aftercooling circuit is only passive protection, which is technically simple, but with age, it becomes potentially dangerous. Over the course of years, it is possible that malfunction appears or operation conditions change. The passive protection doesn't perform tests which could timely detect emergency or even pre-emergency conditions during period of operation of the furnace (heating) as well as during time when the furnace is not operating (out of heating season), so it doesn't inform the user about condition of the heating system and the user does not learn about a state of emergency before failure actually appears.

The third disadvantage of state of the art lies in its ineffectiveness. Every aftercooling of the furnace can cost an appreciable amount of money, especially at cases where the output of the aftercooling circuit runs directly into sewerage, so water just runs through the aftercooling circuit, heats up, and then, virtually without any use, runs into sewerage.

The fourth disadvantage of state of the art lies in the fact that, the configuration with an aftercooling circuit basically does not offer any alternative heating possibility in the case of electric power cut, i.e. heating during electric network failure.

The goal of the invention is to eliminate or at least minimize disadvantages of state of the art, particularly to enable reduction of dependency of truly functional protection from overheating of a hot-water furnace for local heating on a size of water supplies, and reduction of water consumption at aftercooling execution, to enable malfunction prevention by active monitoring of condition of both furnace and heating system during heating season as well as out of heating season, and also to offer an alternative heating possibility for the duration of electric network failure.

### Principle of the invention

The goal of invention is achieved by the device for overheating protection of a hot-water furnace for local heating, the principle of which consists in the fact that to the main heating circuit is in parallel manner assigned at least one external protective heating circuit, both circuits are by a regulated valve interconnected at the output of heated water from the furnace, in the protective heating circuit is integrated at least one additional heat consumer, whose emitted thermal energy is higher than the maximal furnace output, to heated water output from the furnace is assigned at least one state sensor, particularly a temperature sensor and/or a pressure sensor, the state sensor is connected to a module for state detection and evaluation, which is coupled with a control device of power elements, particularly the regulated valve and operation control of the furnace, while individual electrically supplied elements are connected to primary source of electrical power and to backup source of electrical power equipped with at least one storage battery.

An advantage of this solution is that the device secures protection of the furnace during failure of a current electric network as well as during overheating of a furnace caused by water leak in main heating system, also during closing of all heating units or furnace regulation failure, and also during cut off of water flow through a furnace.

### Description of the drawings

The invention is schematically represented in the drawings, where the Fig. 1 shows the first example of embodiment of protection from overheating of a hot-water furnace for local heating, the Fig. 2 shows the second example of embodiment of protection from overheating of a hot-water furnace for local heating, the Fig. 3 shows the third example of embodiment of protection from overheating of a hot-water furnace for local heating, the Fig. 4 shows the fourth example of embodiment of protection from overheating of a hot-water furnace for local heating and the Fig. 5 shows the fifth example of embodiment of protection from overheating of a hot-water furnace for local heating.

### Examples of embodiment

Device for protection of a hot-water furnace for local heating from overheating consists in a set of mutually cooperating technical devices and measures. Particularly it concerns creation of at least one external protective heating circuit **2,** in which there is at least one additional heat consumer integrated, whose emitted thermal energy is higher than the maximal furnace output. Such an additional heat consumer is represented by one or more heating units and/or one or more accumulation tanks, alternatively various combinations of heating units and accumulation tanks, etc. In the case of need, the additional heat consumer secures effective heat dissipation out of the furnace 6.

In an output of heated water from the furnace **6,** there are state sensors integrated, particularly a temperature sensor 5 and/or a pressure sensor **4,** or also sensors of water level or other quantities, from which it is possible to determine values of temperature, pressure and others potentially monitored quantities. The acquired values are processed by a module **7** for state detection and evaluation, which on a basis of the values evaluates whether critical conditions arise, such as water leakage, overheating of a main heating circuit **1,** etc.

In the case where water doesn't circulate in the main or the protective heating circuit **1, 2** spontaneously, there is at least one circulation pump **13, 14** integrated in that circuit, however preferably both circulation pumps **13, 14** are integrated there, one as the main pump and the second as a backup, for a case of main pump's malfunction.

The current state of supply from electric network is monitored by a backup source of electrical power **12** with at least one storage battery **120,** which supplies sensors, valves **3,** circulation pumps **13, 14,** etc. in the case of electric network failure.

In the main heating circuit **1,** so called operating circuit, as well as in the external protective heating circuit **2**, there are check valves **10, 11** integrated to prevent water from leaking in the case of damaged circuit **1, 2**. The check valves **10, 11** can be replaced by a regulated valve.

The external protective heating circuit **2** is basically parallel to the main heating circuit **1,** so called operating circuit, both circuits **1, 2** being interconnected at the output of heated water from the furnace by means of a regulated valve **3,** e.g. as it is depicted in pictures with a three-way regulated valve or an other appropriate means.

Operation logic of the device for protection of a hot-water furnace for local heating from overheating is as follows. In the case that the module **7** for state detection evaluates that pressure in the main heating circuit **1** has decreased repeatedly or it is lower than the minimal permissible level, water leakage from the main heating circuit **1** is concluded. Measured pressure in the main heating circuit **1** being higher than the maximal permissible pressure level means that temperature in the main heating circuit **1** is high or the main heating circuit **1** is over-pressured. Impermissible temperature is at the same time duplicately reported by the module **7** for state detection and a possible temperature sensor **5.** In the case of pressure level drop, the power elements control device **15** secures redirection of heated water flow from a damaged circuit **1, 2** to the second, undamaged circuit **1, 2** via the regulated valve 3 integrated into the interconnection of the main heating circuit and the protective heating circuit **1, 2**, and placed as close as possible to the output of heated water from the furnace **6.** By means of the check valves **10, 11**, it is secured that water can leak neither from the damaged circuit **1, 2**, nor from the opposite side of the damaged circuit **1**, **2**.

The valve **3** can also act as a power element for running heated water into the external protective heating circuit **2**, which can at the same time serve as an operating circuit, however its temperature can be regulated only by means of a thermostat **16** coupled with the module **7** for state detection and evaluation, which records valve **3** opening to the external protective heating circuit **2** and vice versa, depending on commands of the module **7** for state detection and evaluation.

Simultaneously, in the case of malfunction detection, the power elements control device **15** secures switching off of the furnace **6** or its accessories, particularly stopping of an automatic fuel feed, which decreases thermal output of the furnace **6** down to zero, etc. The malfunction detection also initiates alarm reporting by a module **9** for signalling and early-warning.

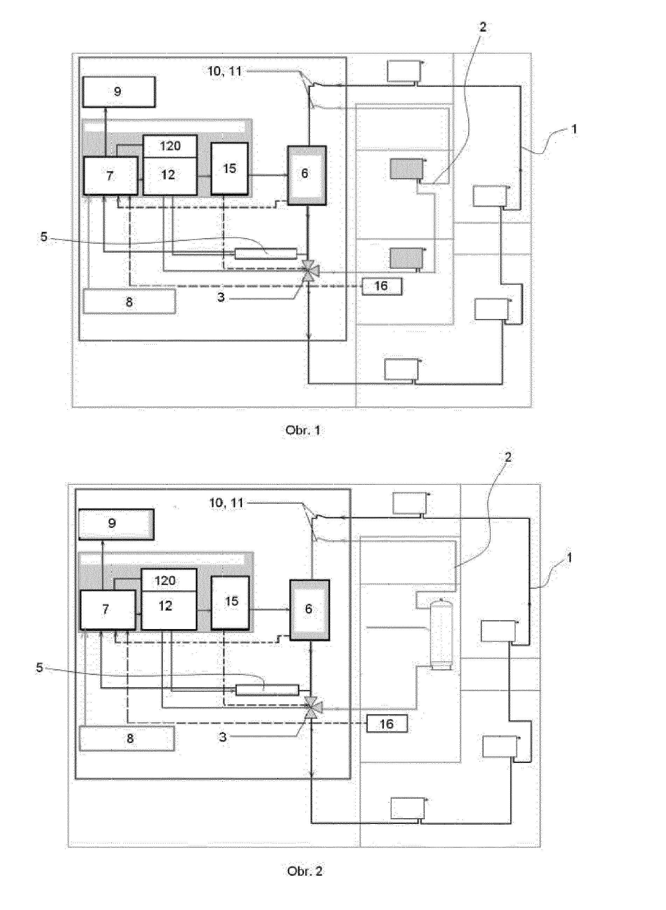

For the example of embodiment in the Fig. 1, two heating circuits are assigned to the furnace **6,** one of which is the main heating circuit **1** and the second is the external protective heating circuit **2**. In the protective heating circuit **2**, there are heating units placed as heat consumers - basically regular water-air exchangers. Inside both circuits **1, 2**, or at least inside the protective heating circuit **2**, water circulates spontaneously or by gravity. Heated water runs from the furnace **6** into both the main heating circuit **1** and the protective heating circuit **2** through the valve **3.** Water temperature is monitored by the temperature sensor **5.** Acquired temperature values are converted to electric signal by the temperature sensor **5** and they are carried to an input of the module **7** for state detection and evaluation, by means of which they are processed and compared with a reference parameter, which is set as a boundary reference value by a connected module 8 for reference parameters setting. Reference parameters are usually entered straight at the initial installation of the device for protection and they are activated by putting the device for protection into operation. In the case of rising of temperature in the main heating circuit 1 above the safe level which is determined by the value of reference parameter, due to either water leakage from the main heating circuit 1 or blockage of water circulation in the main heating circuit **1**, heated water passage into the protective circuit **2** is fully opened by the valve **3,** the furnace **6** is switched off if possible or its power is decreased by means of decreasing or stopping of a fuel feed, or possibility of switching the furnace **6** on is blocked provided that the malfunction occurred at the time when the furnace is switched off (heating if off), and by means of the connected module **9** for signalling and early-warning, the critical condition is reported. The check valve **10** placed in the main heating circuit **1** and the check valve **11** placed in the emergency heating circuit **2** secure that during the time of water leakage, when one of the heating circuits **1, 2** is closed by the valve **3,** water cannot leak from the undamaged heating circuit **1, 2** to the damaged heating circuit **1, 2** and subsequently water cannot leak away through leakage of the damaged heating circuit **1, 2**.

Since all functions of the device for protection of a hot-water furnace for local heating from overheating have to be secured even during the time of failure of current electric network, especially public electric network, the device for protection of a hot-water furnace for local heating from overheating is equipped with a backup source of electrical power **12** of an OFF-LINE type which contains a storage battery **120** and represents the second power supply, and which starts to supply electrical energy needed for operation of electrically-powered elements of the device in the case of primary power supply failure. If backup power supply **12** failure occurs, the device for protection initiates an alarm by means of the module **9** for signalling and early-warning, fully opens passage into the protective circuit **2** by the valve **3,** switches off the furnace **6** if possible, alternatively decreases its power, or blocks possibility of switching the furnace **6** on and keeps the critical condition reporting.

For the example of embodiment in the Fig. 2, in the protective heating circuit **2**, there is an accumulation tank placed, representing a heat consumer with appropriate thermal capacity, i.e. ability to absorb heat during furnace **6** aftercooling.

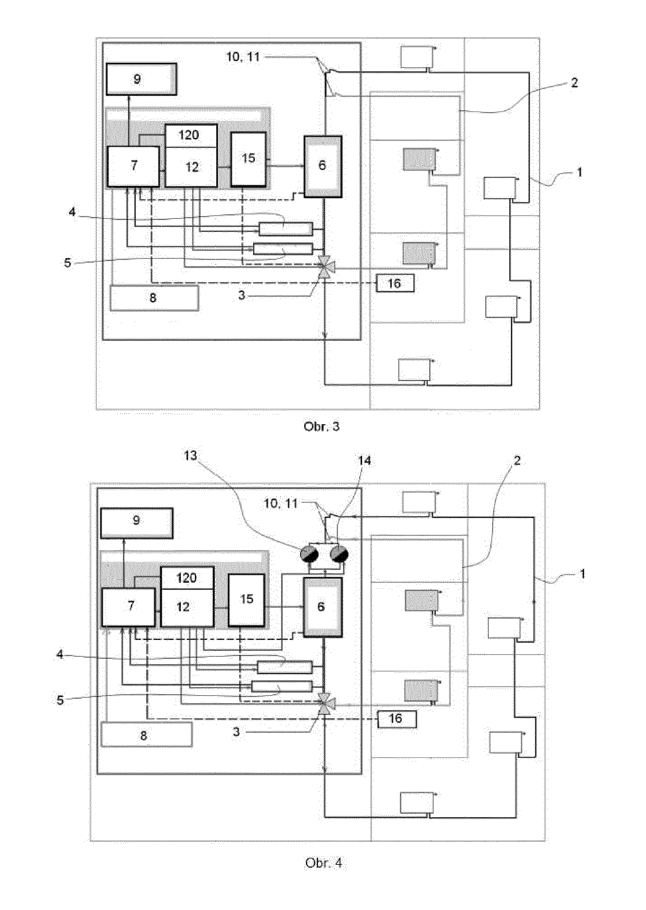

For the example of embodiment in the Fig. 3, two heating circuits are assigned to the furnace **6,** one of which is the main heating circuit **1** and the second is the external protective heating circuit **2**. Both heating circuits **1, 2** have self-acting circulation of water heated in the furnace **6.** Heated water runs at the same time from the furnace **6** into both the main heating circuit **1** and the protective heating circuit **2** through the valve **3.** Furnace **6** temperature and volume of water in the heating circuits 1, **2** are monitored by the pressure sensor **4** and the temperature sensor **5,** both being placed on the furnace 6 body. Acquired values are converted to electric signals by the sensors **4, 5** and they are carried to the module **7** for state detection and evaluation. Then, they are processed and compared with reference parameters, which are set as boundary values by the module **8** for reference parameters setting, into which the values are entered at the installation of the system and they are activated by putting the device for protection of a hot-water furnace for local heating from overheating into operation. In the case of repeated pressure drop, the device initiates an alarm, fully opens water input through the valve **3** into the protective heating circuit **2**, and by means of the valve 3 closes water input into the main heating circuit **1.** It switches off the furnace **6** if possible, alternatively decreases its power, or blocks possibility of switching the furnace **6** on and reports the critical condition by means of the module **9** for signalling and early-warning. If pressure continues to decrease, it would mean that it is in the protective heating circuit **2** where the water leakage occurred. Then, the devices closes water input into the protective heating circuit **2** by the valve **3,** fully opens water input into the main heating circuit **1** and continues to keep the furnace **6** in the switched-off state or the power-decreasing state, or the switching-on blocked state and the module **9** for signalling and early-warning keeps the critical condition reporting.

The device acts in the same way if monitored pressure falls below level of the reference value. The check valve **10** placed in the main heating circuit **1** and the check valve **11** placed in the emergency heating circuit **2** secure that during the time of water leakage, when one of the heating circuits **1, 2** is closed by the valve **3,** water cannot leak from the undamaged heating circuit **1, 2** to the damaged heating circuit **1, 2** and subsequently water cannot leak away through leakage of the damaged heating circuit **1, 2**.

The state of high temperature of the furnace **6** is detected by both the pressure sensor **4** and temperature sensor **5.** The value acquired by the pressure sensor **4** is recalculated by the module **7** for state detection and evaluation depending on temperature measured by the temperature sensor **5**. If one of the two measured parameters is higher than the reference parameters, the device assumes temperature in the heating circuit to be higher than safe and initiates an alarm, fully opens water input through the valve **3** into the protective heating circuit **2**, switches off the furnace **6** if possible, alternatively decreases its power, or blocks possibility of switching the furnace **6** on and reports the critical condition by means of the module **9** for signalling and early-warning.

Since all functions of the device have to be secured even during the time of failure of current electric network, e.g. public electric network, the device for protection of a hot-water furnace for local heating from overheating is equipped with a backup source **12** of an OFF-LINE type which represents the second power supply, and which starts to supply electrically-powered elements of the device with electrical energy in the case of primary power supply failure. If backup power supply **12** failure occurs, the system initiates an alarm, fully opens water input through the valve **3** into the protective heating circuit **2**, switches off the furnace **6** if possible, alternatively decreases its power, or blocks possibility of switching the furnace **6** on and reports the critical condition by means of the module **9** for signalling and early-warning. Water leakage from either of the heating circuits **2**, **2** as well as any backup power supply **12** failure is detected even during the time when the furnace **6** is switched off (heating is off). An alarm initiated by means of the module **9** for signalling and early-warning in such a case is preventive.

For the example of embodiment in the Fig. 4, water in the protective heating circuit **2** or in the both heating circuits **1**, **2** doesn't circulate spontaneously, so there is at least one circulation pump **13,** preferably backed-up by the second circulation pump **14,** integrated in the relevant circuit or in the both circuits **1, 2**. There is a requirement that whichever of the two circulation pumps **13, 14** is running, water flow rate is sufficient. In spite of failure of one of the circulation pumps **13, 14,** water is forced into the heating circuits **1**, **2**. Configuration and placement don't block water flow and the circulation pump **13, 14,** which remains operational, is sufficient to secure adequate water flow in the heating circuits **1, 2**. All other functions of the device are identical to the example of embodiment according to the Fig. 3.

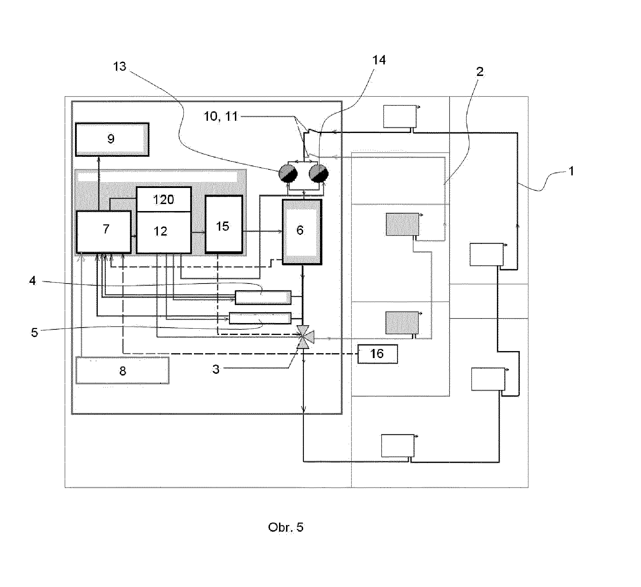

For the example of embodiment in the Fig. 5, there is a sensor of water level drop in the heating circuit **1, 2** used instead of the pressure sensor from the Fig. 1 to 4. The sensor of water level drop records the direct value and converts it to electric signal which is carried to the module **7** for state detection and evaluation. If water level drops in the monitored heating circuit **1, 2**, the device fully opens water input through the valve **3** into the protective heating circuit **2**, switches off the furnace **6** if possible, alternatively decreases its power, or blocks possibility of switching the furnace **6** on and reports the critical condition by means of the module **9** for signalling and early-warning. To secure overall functionality of the device, it is necessary that the water level sensor detects at least two consecutive drops at two different levels. It means that if water leaks from the protective heating circuit **2**, water continues to leak and the sensor detects this state via drop down to next level. The signal of water level decreased to the second, i.e. lower level causes that the module **7** for state detection and evaluation closes water input into the protective heating circuit **2** and fully opens water input into the main heating circuit **1.** It switches off the furnace **6** if possible, alternatively decreases its power, or blocks possibility of switching the furnace **6** on and reports the critical condition by means of the module **9** for signalling and early-warning. All other functions are identical to the example of embodiment according to the Fig. 1 and 2.

### Industrial application

The invention is applicable for protection of hot-water furnaces for local heating from overheating, i.e. furnaces of output up to 100 kW used in households or small buildings.

### List of referential markings

- 1: main heating circuit
- 2: protective heating circuit
- 3: regulated valve
- 4: pressure sensor
- 5: temperature sensor
- 6: furnace
- 7: module for state detection and evaluation
- 8: module for reference parameters setting
- 9: module for signalling and early-warning
- 10: check valve
- 11: check valve
- 12: backup source of electrical power
- 13: circulation pump
- 14: circulation pump
- 15: power elements control device
- 16: thermostat
- 120: storage battery

## Claims

1. Device for overheating protection of a hot-water furnace for local heating, where the furnace is by its internal heat exchanger connected to the main heating circuit, **characterized by that** to the main heating circuit (1) is in parallel manner assigned at least one external protective heating circuit (2), both circuits (1, 2) are by a regulated valve (3) interconnected at the output of heated water from the furnace (6), in the protective heating circuit (2) is integrated at least one additional heat consumer, whose emitted thermal energy is higher than the maximal furnace (6) output, to heated water output from the furnace (6) is assigned at least one state sensor, particularly a temperature sensor (5) and/or a pressure sensor (4), the state sensor is connected to a module (7) for state detection and evaluation, which is coupled with a control device (15) of power elements, particularly the regulated valve (3) and operation control of the furnace (6), while individual electrically supplied elements are connected to a primary source of electrical power and to a backup source of electrical power (12) equipped with at least one storage battery (120).

2. Device according to claim 1, **characterized by that** an additional heat consumer is created as one or more heating units and/or one or more accumulation tanks.

3. Device according to claim 1, **characterized by** the operating and/or the protective heating circuit (1, 2) is equipped with at least one circulation pump coupled with the control device (15) of power elements.

4. Device according to claim 1, **characterized by that** in both the main heating circuit (1) and the protective heating circuit (2) there are integrated check valves to prevent water leakage.

5. Device according to claim 1, **characterized by that** the module (7) for state detection and evaluation is coupled with the module (9) for signalling and early-warning.

6. Device according to claim 1, **characterized by that** to the protective heating circuit (2) is assigned thermostat coupled with the module (7) for state detection and evaluation.

7. Device according to claim 1, **characterized by that** the module (7) for state detection and evaluation is coupled with module (8) for reference parameters setting.
